# FASCICULE DE BREVET EUROPEEN

(11) **EP 0 779 626 B1**
(45) Date de publication et mention de la délivrance du brevet: **29.12.1999**
(21) Numéro de dépôt: 96402445.9
(22) Date de dépôt: 14.11.1996
(51) Int. Cl.: G21C 1/09

(54) **Dispositif d'aspersion d'un pressuriseur d'un réacteur nucléaire à eau sous pression**
Druckhaltersprühsystem für einen Druckwasserkernreaktor
Pressurizer spray system for a pressurized water nuclear reactor

(30) Priorité: 12.12.1995 FR 9514709
(43) Date de publication de la demande: 18.06.1997
(73) Titulaire: FRAMATOME, 92400 Courbevoie (FR)
(72) Inventeur: Bonhomme, Nicolaas, 95300 Pontoise (FR)
(74) Mandataire: Bouget, Lucien

(56) Documents cités:
- GB-A- 2 160 699
- US-A- 4 051 892

## Description

L'invention concerne un dispositif d'aspersion d'un pressuriseur d'un réacteur nucléaire à eau sous pression.

Les réacteurs nucléaires à eau sous pression comportent généralement une cuve dans laquelle est disposé le coeur du réacteur nucléaire constitué par des assemblages de combustible nucléaire qui sont refroidis, pendant le fonctionnement du réacteur nucléaire, par circulation d'un fluide primaire constitué par de l'eau sous pression au contact des assemblages de combustible.

L'eau de refroidissement sous pression du réacteur nucléaire circule à l'intérieur d'un circuit appelé circuit primaire qui comporte plusieurs boucles communiquant avec le volume intérieur de la cuve du réacteur nucléaire et sur chacune desquelles est disposé un générateur de vapeur.

De manière à régler la pression de l'eau de refroidissement dans le circuit primaire du réacteur, un dispositif appelé pressuriseur est placé en dérivation sur la branche chaude de l'une des boucles du circuit primaire, c'est-à-dire sur une canalisation amenant de l'eau de refroidissement échauffée au contact des assemblages de combustible du coeur du réacteur nucléaire à un générateur de vapeur.

Le pressuriseur comporte une enveloppe de forme sensiblement cylindrique disposée avec son axe vertical qui est reliée à la branche chaude, par une conduite de pressurisation débouchant dans la partie inférieure de l'enveloppe du pressuriseur. Le pressuriseur contient de l'eau qui est surmontée par de la vapeur d'eau en équilibre de température et de pression avec l'eau contenue dans la partie inférieure du pressuriseur. Des cannes chauffantes électriques traversant la partie inférieure de l'enveloppe du pressuriseur comportent des éléments chauffants qui sont immergés dans l'eau contenue dans la partie inférieure du pressuriseur. Les cannes chauffantes permettent d'élever la température de l'eau de la partie inférieure du pressuriseur, de manière telle que la pression d'équilibre entre l'eau et la vapeur contenue dans le pressuriseur soit égale à la pression qu'on désire maintenir dans le circuit primaire. Cette pression étant supérieure à la pression d'équilibre de l'eau et de la vapeur à la température moyenne du circuit primaire (315°C), l'eau dans le circuit primaire est dans un état de sous-saturation suffisant pour éviter tout risque d'ébullition. Généralement, la pression dans le circuit primaire est maintenue à une valeur voisine de 155 bars.

Il est également nécessaire, pour des raisons de sécurité d'éviter que la pression dans le circuit primaire ne dépasse un certain niveau.

Pour limiter au besoin la pression dans le pressuriseur qui est mis en communication par la conduite de pressurisation avec le circuit primaire du réacteur, on utilise un dispositif d'aspersion comportant au moins une conduite d'aspersion débouchant dans la partie supérieure du pressuriseur, à l'intérieur de la vapeur, et comportant une buse d'aspersion à son extrémité. La conduite d'aspersion est alimentée en eau sous pression par une ligne d'aspersion reliée à au moins une branche froide du circuit primaire, c'est-à-dire à une canalisation assurant le retour de l'eau de refroidissement récupérée à la sortie d'un générateur de vapeur à l'intérieur de la cuve du réacteur. La ligne d'aspersion comporte une ou plusieurs branches qui sont reliées chacune à une branche froide d'une boucle du circuit primaire, en aval d'une pompe primaire assurant la circulation de l'eau de refroidissement à l'intérieur de la boucle du circuit primaire. La surpression de pompage de la pompe primaire (10 bars) permet d'injecter de l'eau de la branche froide dans la partie supérieure du pressuriseur remplie de vapeur. L'eau injectée dans la partie supérieure du pressuriseur par l'intermédiaire de la buse d'aspersion se vaporise, de sorte que la chaleur de vaporisation de l'eau injectée qui est prélevée à l'intérieur du pressuriseur permet d'abaisser la température du pressuriseur et donc la pression d'équilibre entre la vapeur et l'eau à l'intérieur du pressuriseur.

La quantité d'eau envoyée dans la conduite d'aspersion alimentée par la ligne d'aspersion est réglée par une ou plusieurs vannes disposées sur la ligne d'aspersion.

En fonctionnement normal du réacteur, le débit d'aspersion est assuré par les pompes primaires qui sont entraînées par des moteurs électriques.

Dans le cas d'une situation incidentelle se traduisant par un arrêt des pompes primaires dû à une perte d'alimentation électrique, on alimente la ligne d'aspersion du pressuriseur par de l'eau prélevée dans le circuit de contrôle chimique et volumétrique du réacteur nucléaire (circuit RCV) en injectant l'eau dans la ligne d'aspersion, en utilisant les pompes de charge du circuit RCV qui peuvent être alimentées par un groupe Diesel de secours. On prévoit une ligne d'aspersion auxiliaire assurant une jonction entre le circuit RCV et la ligne d'aspersion du pressuriseur ; les pompes de charge sont mises en fonctionnement dans le cas où le circuit électrique n'assure plus l'alimentation des pompes primaires. Un tel dispositif permet de fonctionner en cas de perte d'alimentation des pompes primaires mais nécessite néanmoins l'utilisation d'une source de puissance électrique.

De plus, l'utilisation de la ligne reliée au circuit RCV et des pompes de charge de ce circuit entraîne l'arrivée dans la partie supérieure du pressuriseur, d'eau à une température bien inférieure à la température de l'eau dans le circuit primaire. L'eau dans le circuit RCV est en effet à une température de l'ordre de 20°C, si bien qu'il se produit d'importants transitoires thermiques sur la ligne d'aspersion du pressuriseur, du fait que la ligne d'aspersion débouche dans le pressuriseur qui est à une température de l'ordre de 300°C. Ces transitoires thermiques particulièrement importants sont susceptibles d'entraîner des fissurations dans la tuyauterie du dispositif d'aspersion.

Le but de l'invention est donc de proposer un dispositif d'aspersion d'un pressuriseur d'un réacteur nucléaire à eau sous pression comportant une enceinte ayant une partie inférieure dans laquelle débouche une pluralité de cannes chauffantes électriques et une partie supérieure dans laquelle débouche au moins une conduite d'aspersion alimentée en eau par une ligne d'aspersion, ce dispositif pouvant fonctionner en l'absence de toute alimentation électrique et permettant d'éviter des chocs thermiques de grande amplitude dans les canalisations du dispositif d'aspersion.

Dans ce but, le dispositif suivant l'invention comporte au moins un injecteur ayant une première entrée de vapeur haute pression reliée à la partie supérieure du pressuriseur, une seconde entrée reliée à un moyen d'alimentation en eau et une sortie reliée à la ligne d'aspersion.

Afin de bien faire comprendre l'invention, on va maintenant décrire, à titre d'exemple non limitatif, en se référant aux figures jointes en annexe, un mode de réalisation d'un dispositif d'aspersion suivant l'invention et de manière comparative, un dispositif d'aspersion suivant l'art antérieur.

La figure 1 est une vue schématique d'un circuit primaire d'un réacteur nucléaire à eau sous pression comportant un dispositif d'aspersion suivant l'art antérieur.

La figure 2 est une vue schématique d'un dispositif d'aspersion suivant l'invention.

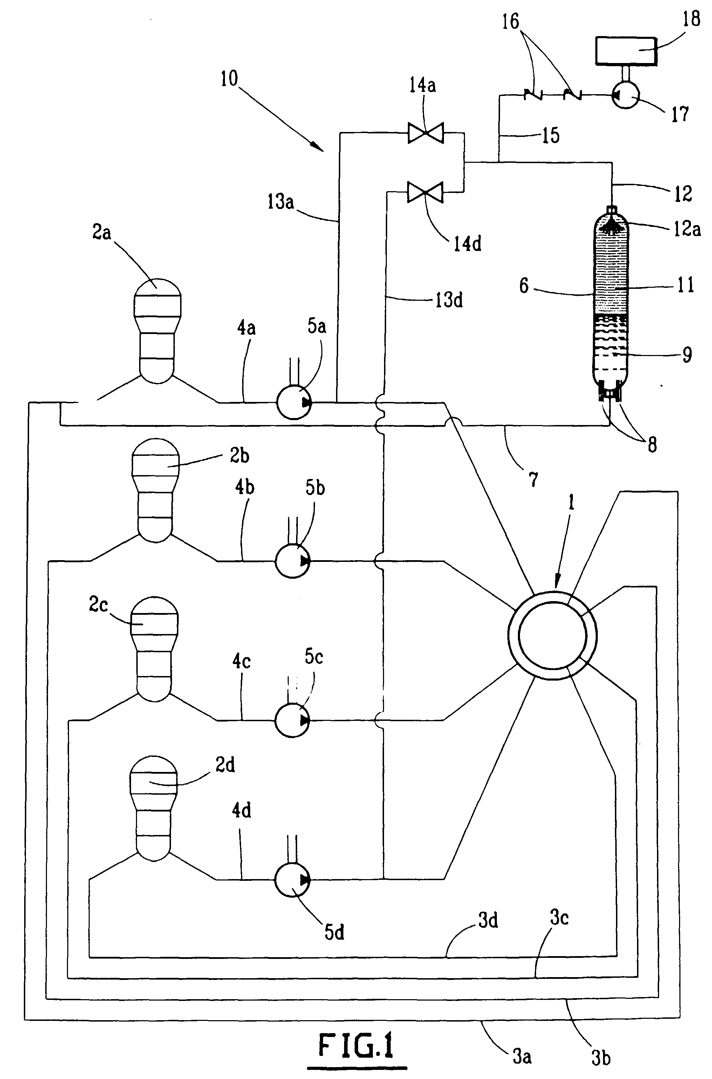

Sur la figure 1, on a représenté en section, la cuve 1 d'un réacteur nucléaire à eau sous pression à l'intérieur de laquelle circule de l'eau sous pression assurant le refroidissement du coeur constitué par des assemblages de combustible nucléaire.

L'eau de refroidissement, échauffée dans le coeur du réacteur nucléaire, est refroidie dans des générateurs de vapeur où elle assure l'échauffement et la vaporisation d'eau alimentaire. Chacun des générateurs de vapeur du réacteur nucléaire est disposé sur une boucle du circuit primaire comportant une branche chaude assurant l'alimentation du générateur de vapeur en eau échauffée au contact du coeur du réacteur nucléaire et une branche froide assurant le retour de l'eau refroidie dans le générateur de vapeur à la cuve du réacteur.

Sur la figure 1, on a représenté de manière schématique le circuit primaire d'un réacteur nucléaire comportant quatre boucles sur chacune desquelles est disposé un générateur de vapeur 2a, 2b, 2c ou 2d. Les quatre boucles du circuit primaire sont réalisées de manière identique, si bien que seule la boucle comportant le générateur de vapeur 2a sera décrite ci-après.

La boucle du générateur de vapeur comporte une branche chaude 3a communiquant à l'une de ses extrémités avec le volume intérieur de la cuve du réacteur nucléaire et débouchant dans une zone située sur le parcours de l'eau de refroidissement sortant du coeur du réacteur nucléaire et une branche froide 4a reliée au volume intérieur de la cuve 1 du réacteur nucléaire, dans une zone située au voisinage de la partie d'entrée du coeur dans lequel pénètre l'eau de refroidissement.

Sur la branche froide 4a est disposée une pompe primaire 5a assurant la circulation de l'eau primaire sous pression à l'intérieur de la boucle du circuit primaire.

Le circuit primaire du réacteur nucléaire comporte de plus un pressuriseur 6 ayant une enveloppe de forme globalement cylindrique fermée par des fonds bombés disposée avec son axe vertical. Le pressuriseur 6 est relié par l'intermédiaire d'une conduite de pressurisation 7 à la branche chaude 3a d'une boucle du circuit primaire.

Des cannes chauffantes électriques 8 pénètrent par le fond inférieur de l'enveloppe du pressuriseur 6 et sont plongées dans de l'eau 9 remplissant la partie inférieure du pressuriseur 6. De la vapeur 11 surmontant le niveau supérieur de l'eau 9 dans le pressuriseur 6 se trouve en équilibre de température et de pression avec l'eau, de sorte que la pression de l'eau 9 dans le pressuriseur peut être réglée par réglage de la température du pressuriseur.

L'échauffement de l'eau dans le pressuriseur peut être assuré par les cannes de chauffage électrique 8 et le refroidissement du pressuriseur par un dispositif d'aspersion désigné de manière générale par le repère 10. Le dispositif d'aspersion comporte une conduite d'aspersion 12 débouchant dans la partie supérieure du pressuriseur 6 remplie de vapeur 11 par l'intermédiaire d'une buse d'aspersion 12a. Le dispositif d'aspersion 10 comporte également une ligne d'aspersion constituée de deux conduites 13a et 13d reliées respectivement à la branche froide 4a d'une première boucle du circuit primaire et à la branche froide 4d d'une seconde boucle du circuit primaire, respectivement, en aval des pompes primaires correspondantes 5a et 5d. A leur extrémité opposée aux branches froides 4a et 4d, les conduites 13a et 13d de la ligne d'aspersion sont reliées, par l'intermédiaire d'un tronçon commun, à la conduite d'aspersion 12 débouchant dans le pressuriseur 6. Des vannes de réglage 14a et 14d sont disposées sur chacune des conduites 13a et 13d de la ligne d'alimentation 10, de manière à régler le débit d'alimentation de la conduite d'aspersion 12. Le tronçon commun de la ligne d'aspersion est relié, par l'intermédiaire d'une conduite 15 sur laquelle sont placés des clapets anti-retour 16, à une pompe de charge 17 du circuit RCV 18.

En situation incidentelle s'accompagnant d'une interruption d'alimentation des pompes primaires 5a et 5b, la ligne d'alimentation du dispositif d'aspersion 10 ne reçoit plus d'eau primaire venant des branches froides 4a et 4d.

Cependant, la fonction d'aspersion peut continuer à être assurée par les pompes de charge telles que 17 du circuit RCV 18 qui injectent de l'eau à température ambiante dans la ligne d'aspersion, à travers les clapets 16. L'eau à température ambiante, par exemple à 20°, qui est introduite dans la ligne d'aspersion est susceptible de produire des chocs froids importants et une fissuration dans la tuyauterie de la ligne d'aspersion.

En outre, il reste nécessaire d'alimenter les pompes de charge 17 en courant électrique par un groupe Diesel qui doit être mis en fonctionnement. Le circuit d'aspersion doit donc encore faire appel à une source d'énergie extérieure.

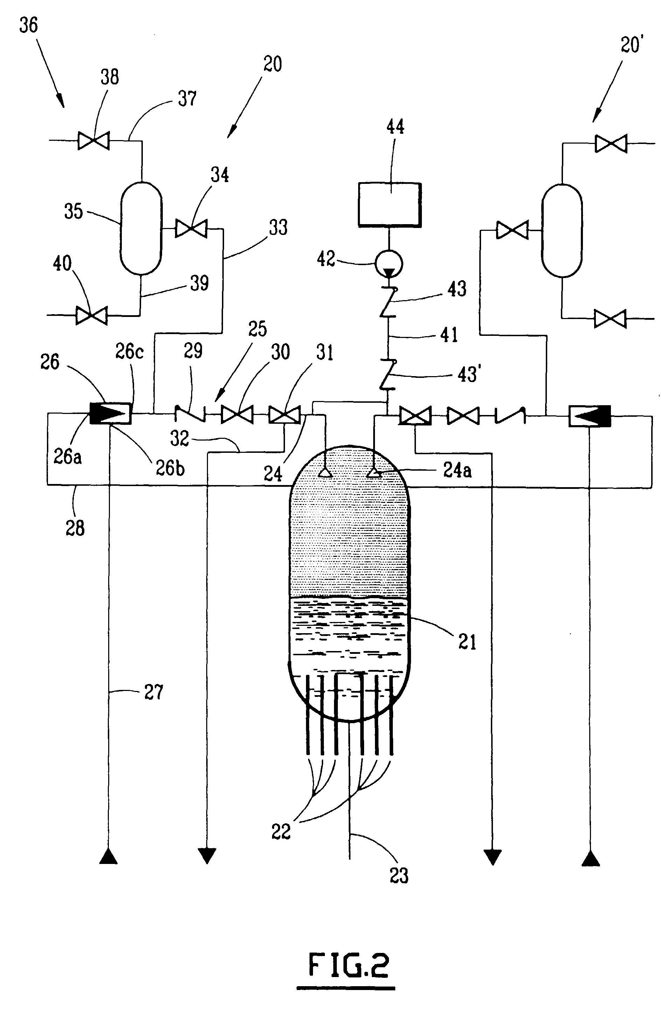

Sur la figure 2, on a représenté un dispositif d'aspersion suivant l'invention désigné de manière générale par le repère 20 permettant d'assurer la fonction de refroidissement par aspersion d'eau, à l'intérieur d'un pressuriseur 21 d'un réacteur nucléaire à eau sous pression. Le pressuriseur 21 comporte une enveloppe de forme générale cylindrique fermée par des fonds bombés et disposée avec son axe vertical.

Le fond inférieur de l'enveloppe du pressuriseur 21 est traversé par des cannes chauffantes 22 et par une conduite de pressurisation 23 reliée à une branche chaude du circuit primaire du réacteur dont la pression est réglée par le pressuriseur 21.

Le système d'aspersion du pressuriseur 21 comporte deux dispositifs d'aspersion identiques qui ont été représentées respectivement sur la partie de gauche et sur la partie de droite de la figure 2. Le dispositif d'aspersion disposé sur la partie de gauche de la figure 2 a été désigné de manière générale par le repère 20 et le dispositif d'aspersion représenté sur la partie de droite sur la figure 2, par le repère 20'.

On ne décrira que le dispositif 20 représenté sur la gauche de la figure, le dispositif 20' étant identique. Les dispositifs d'aspersion 20 et 20' sont redondants, la fonction d'aspersion pouvant être assurée par un seul dispositif.

Le dispositif d'aspersion 20 comporte une conduite d'aspersion 24 débouchant dans la partie supérieure de l'enveloppe du pressuriseur 21 et comprenant, à l'intérieur de l'enveloppe du pressuriseur, une buse d'aspersion 24a. La conduite d'aspersion 24 peut être alimentée en un fluide contenant de l'eau par une ligne d'aspersion 25 qui comporte, selon l'invention, un injecteur de vapeur 26.

L'injecteur de vapeur 26 est réalisé sous une forme habituelle et comporte un conduit d'injecteur présentant une partie d'entrée, un col et une partie de sortie divergente ; la partie d'entrée du conduit d'injecteur comporte une entrée de vapeur à haute pression et une entrée de liquide. La vapeur et le liquide aspiré et entraîné par la vapeur se mélangent et circulent à l'intérieur du conduit d'injecteur jusqu'à la sortie du conduit de l'injecteur.

L'injecteur 26 comporte une entrée haute pression de vapeur 26a reliée par une conduite d'alimentation en vapeur 28 à la partie supérieure de l'enceinte du pressuriseur 21, une entrée d'eau 26b reliée par une conduite d'alimentation en eau 27 à une branche froide du circuit primaire du réacteur nucléaire et une sortie 26c du mélange de vapeur et d'eau reliée à la ligne d'aspersion 25 alimentant la conduite d'aspersion 24. La ligne d'aspersion 25 comporte successivement un clapet anti-retour 29, une vanne d'arrêt 30 et une vanne de réglage à trois voies 31 dont une voie d'entrée est reliée à la ligne d'aspersion 25, une première voie de sortie à la conduite d'aspersion 24 et une deuxième voie de sortie à une conduite de contournement 32 reliée à une branche chaude du circuit primaire du réacteur nucléaire.

Entre la sortie de fluide 26c de l'injecteur de vapeur 26 et le clapet anti-retour 29, la canalisation de la ligne d'aspersion 25 est reliée, par l'intermédiaire d'une conduite en dérivation 33 sur laquelle est placée une vanne d'arrêt 34, à un réservoir 35 d'une capacité nettement inférieure à la capacité du pressuriseur 21, cette capacité pouvant être de l'ordre de quelque mètres cubes. L'enveloppe du réservoir 35 qui présente une forme générale cylindrique est fermée à ses extrémités par des fonds bombés. Dans la partie supérieure du réservoir 35 débouche une conduite d'évent 37 sur laquelle est disposée une vanne d'arrêt 38. Dans la partie inférieure du réservoir 35 débouche une conduite de vidange 39 sur laquelle est disposée une vanne d'arrêt 40.

La conduite d'évent 37 et la conduite de vidange 39 sont reliées au réservoir de décharge du pressuriseur (RDP), non représenté sur la figure 2.

L'ensemble du réservoir 35, des conduites d'évent et de vidange 37, 39 et de la conduite en dérivation 33 constitue un dispositif de démarrage du système d'aspersion désigné de manière générale par le repère 36.

Lorsque le réacteur nucléaire est en fonctionnement, le pressuriseur 21 renferme de l'eau dans sa partie inférieure dans laquelle pénètre les cannes chauffantes 22 et de la vapeur dans sa partie supérieure dans laquelle débouche les conduites d'aspersion telles que 24 terminées par une buse d'aspersion 24a disposée sous le dôme supérieur du pressuriseur.

L'eau et la vapeur à l'intérieur du pressuriseur sont à une température qui est maintenue au voisinage de 345°C en utilisant les cannes chauffantes 22 et les conduites d'aspersion telles que 24, 24a. La pression d'équilibre entre la vapeur et l'eau dans le pressuriseur correspond à la pression moyenne dans le circuit primaire qui est de 155 bars.

De la vapeur sous pression prélevée dans la partie supérieure du pressuriseur 21 par la conduite d'alimentation en vapeur 28 de l'injecteur de vapeur 26 est amenée à l'entrée haute pression 26a de l'injecteur 26. La vapeur sous pression circulant dans le conduit de l'injecteur 26 a une vitesse croissante et une pression décroissante dans une première partie du conduit, de sorte que de l'eau de la branche froide du circuit primaire à une pression de l'ordre de 155 bars et à une température de 293°C est aspirée par l'injecteur au niveau de sa seconde entrée 26b. L'eau et la vapeur se mélangent dans le conduit de l'injecteur, en particulier au niveau du col puis le mélange d'eau et de vapeur s'écoule par la partie divergente du conduit de l'injecteur. La vitesse de circulation du mélange diminue dans la partie divergente du conduit et la pression augmente.

A la sortie 26c de l'injecteur communiquant avec l'entrée de la ligne d'alimentation 25 du dispositif d'aspersion 20, la pression du mélange est supérieure à la pression de la vapeur prélevée dans la partie supérieure du pressuriseur 21 et à la pression de l'eau prélevée dans la branche froide du circuit primaire. Le mélange d'eau et de vapeur amené à la conduite d'aspersion 24 par la ligne d'aspersion 25 dont la pression est sensiblement supérieure à la pression dans le pressuriseur peut donc être injecté par la buse 24a dans le pressuriseur. L'eau du mélange injecté par la ligne d'aspersion 24 se vaporise à l'intérieur du pressuriseur 21, de sorte que la chaleur de vaporisation assure un certain refroidissement du pressuriseur. La quantité de mélange eau-vapeur et donc la quantité d'eau introduite dans le pressuriseur par la ligne d'aspersion 24, 24a peut être réglée grâce à la vanne trois voies 31. Une partie plus ou moins importante ou même la totalité du mélange de fluide sortant de l'injecteur peut être dérivée par la conduite 32 vers une branche chaude du circuit primaire du réacteur. On peut donc régler facilement le débit envoyé dans la conduite d'aspersion, bien que l'injecteur 26 fonctionne toujours dans les mêmes conditions, par simple manoeuvre d'une vanne trois voies. L'eau sous pression prélevée dans la branche froide du circuit primaire par l'injecteur qui est à une température de l'ordre de 293°C, est dans un état de sous-saturation, sa température étant sensiblement inférieure à la température d'équilibre liquide-vapeur à la pression primaire qui correspond à la température dans le pressuriseur.

L'ensemble du circuit primaire soumis à une pression moyenne de 155 bars renferme de l'eau en état de sous-saturation, la sous-saturation étant plus forte dans les branches froides où la température de l'eau est de l'ordre de 293°C que dans les branches chaudes où la température est de l'ordre de 328°C.

Comme indiqué plus haut, l'injecteur de vapeur fonctionne avec un débit de sortie sensiblement constant, le dispositif d'aspersion pouvant fonctionner avec une efficacité maximale lorsque la totalité du débit sortant de l'injecteur est dirigée par la vanne trois voies 31 dans la conduite d'aspersion. Au contraire, le dispositif d'aspersion fonctionne avec une efficacité minimale et éventuellement avec un débit d'aspersion nul, lorsque le débit est dirigé en partie ou totalement par la vanne trois voies 31, vers une branche chaude du circuit primaire.

La vapeur utilisée comme fluide moteur dans l'injecteur de vapeur est une vapeur saturée, c'est-à-dire une vapeur dans des conditions de pression et de température correspondant à la courbe d'équilibre liquide-vapeur; cette température et cette pression correspondent à la température et la pression au pressuriseur, à savoir respectivement 345°C et 155 bars environ. Du fait de l'utilisation d'une vapeur saturée comme fluide moteur de l'injecteur qui est mélangée avec l'eau primaire venant d'une branche froide, on maintient une sous-saturation de l'eau primaire plus importante que dans le cas où l'on utiliserait une vapeur surchauffée. Cependant, cette sous-saturation de l'eau primaire parvenant dans la ligne d'aspersion est moins importante que dans le cas des dispositifs selon l'art antérieur dans lesquels on utilise les pompes primaires pour injecter de l'eau d'une branche froide dans la ligne d'aspersion. Cette perte de sous-saturation doit être compensée par une légère augmentation du débit nominal de l'aspersion, par rapport au débit utilisé dans le cas des dispositifs suivant l'art antérieur.

Le fait d'utiliser deux dispositifs d'aspersion identiques comportant chacun un injecteur de vapeur et une vanne de réglage à trois voies permet d'améliorer la sûreté de fonctionnement du dispositif d'aspersion par effet de redondance.

En outre, chacun des deux dispositifs d'aspersion fonctionne sans utiliser une force motrice extérieure pour injecter du fluide dans la ligne d'aspersion.

Le dispositif suivant l'invention permet de supprimer toute alimentation du circuit d'aspersion par les pompes primaires et de réaliser la fonction d'aspersion avec une grande sûreté.

Cependant, comme dans le cas de l'art antérieur, il est possible de prévoir un débit d'aspersion auxiliaire venant du circuit de contrôle volumétrique et chimique du réacteur (RCV) qui peut être utilisé, par exemple pendant les phases de démarrage et d'arrêt du réacteur nucléaire, et éventuellement dans les phases d'arrêt après un incident, pour condenser la vapeur résiduelle dans le pressuriseur et pour assurer un passage du pressuriseur dans un état monophasique. Pour cela, on peut prévoir une ligne supplémentaire 41 reliée d'une part aux conduites d'aspersion telles que 24 des deux dispositifs d'aspersion 20 et 20' et d'autre part à son extrémité opposée à une pompe 42 du circuit RCV 44, avec interposition de clapets anti-retour tels que 43 et 43'.

Il est à remarquer que lors des phases de démarrage et d'arrêt du réacteur nucléaire, la température du pressuriseur est sensiblement inférieure à la température de fonctionnement du circuit primaire, cette température étant au plus égale à environ 180°C. Les chocs thermiques dus à l'introduction d'eau à la température ambiante, par exemple à 20° dans les lignes d'aspersion du pressuriseur, sont donc beaucoup plus faibles que dans le cas où le circuit RCV est utilisé de manière auxiliaire, pour injecter de l'eau dans les conduites d'aspersion du pressuriseur dans une situation incidentelle dans laquelle les pompes primaires sont défaillantes.

Chacun des dispositifs d'aspersion 20 et 20' selon l'invention représentés sur la figure 2 comporte un dispositif de démarrage tel que 36 qui permet d'assurer un amorçage et un démarrage de l'injecteur lors de la mise en pression et en température du circuit primaire du réacteur.

Au moment du démarrage, le réservoir 35 de chacun des dispositifs de démarrage est mis en communication par ouverture de la vanne 40 de la conduite de vidange 39 et de la vanne 38 de la conduite d'évent 37, avec le réservoir de décharge du pressuriseur, la vanne d'arrêt 34 étant fermée. Le réservoir 35 de chacun des dispositifs de démarrage 36 se remplit d'une atmosphère d'azote à basse pression provenant du réservoir de décharge du pressuriseur. On ferme la vanne 40 de la conduite de vidange 39 et la vanne 38 de la conduite d'évent 37.

Le circuit primaire et le pressuriseur se mettent en température, la vanne d'arrêt 34 étant ouverte et un débit de vapeur est envoyé à l'injecteur depuis la partie supérieure du pressuriseur par la conduite 28. De l'eau est aspirée dans la branche froide, de sorte qu'un mélange d'eau et de vapeur est envoyé à l'entrée de la ligne d'aspersion 25 par l'injecteur 26, la pression du mélange d'eau et de vapeur est cependant insuffisante pour ouvrir le clapet 29 qui est fermé par la contre-pression exercée par le pressuriseur. Le remplissage du réservoir 35 du dispositif de démarrage 36 fait monter la pression en aval de l'injecteur, jusqu'au moment où cette pression dépasse la pression dans le pressuriseur 21. Le mélange sortant de l'injecteur est alors envoyé dans la ligne d'aspersion 25 et, par son intermédiaire, dans la conduite d'aspersion 24 débouchant dans le pressuriseur. On ferme alors la vanne 34 d'admission de fluide dans le réservoir 35 du dispositif de démarrage et l'on réalise la vidange du réservoir 35 dans le réservoir de décharge du pressuriseur en ouvrant les vannes 38 et 40. Le dispositif d'aspersion du pressuriseur est alors amorcé et démarré et le dispositif de démarrage se trouve à nouveau dans une situation d'attente pour une nouvelle séquence de démarrage.

Le dispositif d'aspersion suivant l'invention peut donc fonctionner sans utilisation d'une force motrice extérieure quelconque.

Le dispositif d'aspersion ne comporte d'autre part aucune pièce mobile en rotation ou aucun élément mécanique susceptible de subir une rupture ou une dégradation en service. Le fonctionnement du dispositif suivant l'invention est donc très sûr. En outre, l'utilisation d'un dispositif d'aspersion redondant ne comportant que des éléments d'une grande sûreté de fonctionnement tels que les injecteurs permet d'éviter toute utilisation d'une source auxiliaire de liquide d'aspersion provenant d'un circuit tel que le circuit de contrôle volumétrique et chimique du réacteur, sauf pendant les phases de démarrage ou d'arrêt du réacteur nucléaire. Comme expliqué plus haut, dans ces phases de démarrage ou d'arrêt, la température du circuit primaire est très inférieure à la température du circuit pendant le fonctionnement normal du réacteur nucléaire et on évite ainsi des chocs thermiques importants dans les canalisations du dispositif d'aspersion.

L'invention ne se limite pas au mode de réalisation qui a été décrit.

C'est ainsi que les différentes parties du dispositif d'aspersion et l'injecteur de vapeur peuvent être réalisés sous une forme différente de celle qui a été décrite.

L'alimentation en eau de l'injecteur peut être assurée par un moyen différent d'une branche froide du circuit primaire, par exemple par un réservoir contenant de l'eau à haute température et à haute pression.

On peut également utiliser un dispositif de démarrage différent d'un réservoir de mise en pression de la ligne d'aspersion.

L'invention peut s'appliquer à tout réacteur nucléaire à eau sous pression quel que soit le nombre de boucles constituant le circuit primaire.

## Revendications

1. Dispositif d'aspersion d'un pressuriseur (21) d'un réacteur nucléaire à eau sous pression comportant une enceinte ayant une partie inférieure dans laquelle débouche une pluralité de cannes chauffantes électriques (22) et une partie supérieure dans laquelle débouche au moins une conduite d'aspersion (24) alimentée en eau par une ligne d'aspersion (25), caractérisé par le fait qu'il comporte au moins un injecteur (26) ayant une première entrée de vapeur haute pression (26a) reliée à la partie supérieure du pressuriseur (21), une seconde entrée (26b) reliée à un moyen d'alimentation en eau et une sortie (26c) reliée à la ligne d'aspersion (25).

2. Dispositif suivant la revendication 1, caractérisé par le fait que le moyen d'alimentation en eau de la seconde entrée (26b) de l'injecteur de vapeur (26) est constitué par une conduite d'alimentation (27) reliée à la seconde entrée (26b) de l'injecteur (26) et alimentée par une branche froide du circuit primaire du réacteur nucléaire.

3. Dispositif suivant l'une quelconque des revendications 1 et 2, caractérisé par le fait qu'une vanne trois voies (31) est disposée sur la ligne d'aspersion (25), une première voie de la vanne (31) étant reliée par la ligne d'aspersion (25) à la sortie (26c) de l'injecteur de vapeur (26), une seconde voie de la vanne (31) étant reliée à la conduite d'injection (24) débouchant dans la partie supérieure du pressuriseur (21) et une troisième voie de la vanne (31) étant reliée par une conduite en dérivation (32) à une branche chaude du circuit primaire du réacteur nucléaire.

4. Dispositif suivant l'une quelconque des revendications 1, 2 et 3, caractérisé par le fait qu'un clapet anti-retour (29) est disposé sur la ligne d'aspersion (25) entre la sortie (26c) de l'injecteur et la conduite d'aspersion (24) et que la ligne d'aspersion (25) est reliée, par l'intermédiaire d'une conduite (33) en dérivation entre la sortie (26c) de l'injecteur (26) et le clapet anti-retour (29) à un réservoir (35) d'un dispositif de démarrage (36) du dispositif d'aspersion (20), par l'intermédiaire d'une vanne d'arrêt (34).

5. Dispositif suivant la revendication 4, caractérisé par le fait que le réservoir (35) est relié à sa partie supérieure, par l'intermédiaire d'une ligne d'évent (37) et à sa partie inférieure par l'intermédiaire d'une ligne de vidange (39), à un réservoir de vidange de liquide et de remplissage en gaz.

6. Dispositif suivant la revendication 5, caractérisé par le fait que le réservoir de vidange de liquide et de remplissage en gaz est constitué par le réservoir de décharge du pressuriseur du réacteur nucléaire.

7. Dispositif suivant l'une quelconque des revendications 5 et 6, caractérisé par le fait qu'une première vanne d'arrêt (38) est disposée sur la conduite d'évent (37) et qu'une seconde vanne d'arrêt (40) est disposée sur la conduite de vidange (39), entre le réservoir (35) du dispositif de démarrage (36) et le réservoir de vidange et de remplissage en gaz.

8. Dispositif suivant l'une quelconque des revendications 1 à 7, caractérisé par le fait que la ligne d'aspersion (25) du dispositif d'aspersion (20) est reliée à un moyen d'alimentation en eau auxiliaire (42, 44), par l'intermédiaire d'une ligne en dérivation (41) et d'au moins un clapet anti-retour (43, 43').

9. Dispositif suivant la revendication 8, caractérisé par le fait que le moyen d'alimentation auxiliaire en eau (42, 44) est constitué par le circuit de contrôle volumétrique et chimique (44) du réacteur nucléaire et au moins une pompe de charge (42) de ce circuit (44).

10. Dispositif suivant l'une quelconque des revendications 1 à 9, caractérisé par le fait qu'il comporte deux ensembles redondants (20, 20') comprenant chacun une conduite d'aspersion (24) dans la partie supérieure du pressuriseur (21), une ligne d'alimentation (25) de la ligne d'aspersion (24) et un injecteur de vapeur (26) ayant une sortie (26c) reliée à la ligne d'aspersion (25).

## Patentansprüche

1. Sprühsystem für einen Druckhalter (21) eines Druckwasserkernreaktors, mit einer Hülle, die einen unteren Teil, in den mehrere elektrische Heizstäbe (22) eintreten, und einen oberen Teil aufweist, in den wenigstens eine Sprühleitung (24) mündet, die mit Wasser aus einer Sprühlinie (25) gespeist wird, dadurch **gekennzeichnet,** daß es wenigstens einen Injektor (26) aufweist, der einen mit dem oberen Teil des Druckhalters (21) verbundenen ersten Einlaß (26a) für Hochdruckdampf, einen mit einem Wasser-Speisesystem verbundenen zweiten Einlaß (26b) und einen mit der Sprühlinie (25) verbundenen Auslaß (26c) aufweist.

2. Sprühsystem nach Anspruch 1, dadurch **gekennzeichnet,** daß das Wasser, Speisesystem für den zweiten Einlaß (26b) des Dampfinjektors (26) durch eine Speiseleitung (27) gebildet wird, die mit dem zweiten Einlaß (26b) des Injektors (26) verbunden ist und aus einem kalten Zweig des Primärkreislaufs des Kernreaktors gespeist wird.

3. Sprühsystem nach Anspruch 1 oder 2, dadurch **gekennzeichnet,** daß in der Sprühlinie (25) ein Dreiwegeventil (31) angeordnet ist, dessen erster Weg über die Sprühlinie (25) mit dem Auslaß (26c) des Dampfinjektors (26) verbunden ist, dessen zweiter Weg mit der Injektionsleitung (24) verbunden ist, die in den oberen Teil des Druckhalters (21) mündet, und dessen dritter Weg durch eine Zweigleitung (32) mit einem heißen Zweig des Primärkreislaufs des Kernreaktors verbunden ist.

4. Sprühsystem nach einem der Ansprüche 1 bis 3, dadurch **gekennzeichnet,** daß in der Sprühlinie (26) zwischen dem Auslaß (26c) des injektors und der Sprühleitung (24) ein Rückschlagventil (29) angeordnet ist und daß die Sprühlinie (25) zwischen dem Auslaß (26c) des Injektors (26) und dem Rückschlagventil (29) durch eine Zweigleitung (33) und über ein Sperrventil (34) mit einem Reservoir (35) einer Anlaufvorrichtung (36) des Sprühsystems (20) verbunden ist.

5. Sprüsystem nach Anspruch 4, dadurch **gekennzeichnet,** daß das Reservoir (35) in seinem oberen Teil über eine Lüftungsleitung (37) und in seinem unteren Teil über eine Entleerungsleitung (39) mit einem Behälter zum Ablassen von Flüssigkeit und zum Füllen mit Gas verbunden ist.

6. Sprühsystem nach Anspruch 5, dadurch **gekennzeichnet,** daß der Behälter zum Ablassen von Flüssigkeit und zum Füllen mit Gas durch den Entladebehälter des Druckhalters des Kernreaktors gebildet wird.

7. Sprühsystem nach Anspruch 5 oder 6, dadurch **gekennzeichnet** daß ein erstes Sperrventil (38) in der Lüftungsleitung (37) und ein zweites Sperrventil (40) in der Entleerungsleitung (39) zwischen dem Reservoir (35) der Anlaufvorrichtung (36) und dem Behälter zum Entleeren und zum Füllen mit Gas angeordnet ist.

8. Sprühsystem nach einem der Ansprüche 1 bis 7, dadurch **gekennzeichnet,** daß die Sprühlinie (25) des Sprühsystems (20) über eine Zweigleitung (41) und wenigstens ein Rückschlagventil (43, 43') mit einer Wasser-Hilfsspeiseeinrichtung (42, 44) verbunden ist.

9. Sprühsystem nach Anspruch 8, dadurch **gekennzeichnet,** daß die Wasser-Hilfsspeiseeinrichtung (42, 44) durch den volumetrischen und chemischen Kontrollkreislauf (44) des Kernreaktors und wenigstens eine Ladepumpe (42) dieses Kreislaufs (44) gebildet wird.

10. Sprühsystem nach einem der Ansprüche 1 bis 9, dadurch **gekennzeichnet,** daß es zwei redundante Baugruppen (20, 20') aufweist, die jeweils eine in den oberen Teil des Druckhaltes (21) führende Sprühleitung (24), eine Speiseleitung (25) für die Sprühlinie (24) und einen Dampfinjektor (26) umfassen, dessen Auslaß (26c) mit der Sprühlinie (25) verbunden ist.

## Claims

1. Sprinkler apparatus of a pressuriser (21) of a pressurised water nuclear reactor comprising an enclosure having a lower part into which a plurality of electric heating rods (22) emerge and an upper part into which at least one sprinkler duct (24) supplied with water by a sprinkler line (25) emerges, characterised in that it comprises at least one injector (26) having a first high pressure vapour inlet (26a) connected to the upper part of the pressuriser (21), a second inlet (26b) connected to water supply means and an outlet (26c) connected to the sprinkler line (25).

2. Apparatus according to claim 1, characterised in that the water supply means to the second inlet (26b) of the vapour injector (26) consist of a supply duct (27) connected to the second inlet (26b) of the injector (26) and supplied by a cold branch of the primary circuit of the nuclear reactor.

3. Apparatus according to one of claims 1 and 2, characterised in that a three-way valve (31) is arranged on the sprinkler line (25), a first channel in the valve (31) being connected by the sprinkler line (25) to the outlet (26c) of the vapour injector (26), a second channel in the valve (31) being connected to the injection duct (24) opening into the upper part of the pressuriser (21) and a third channel in the valve (31) being connected by a bypass duct (32) to a hot branch of the primary circuit of the nuclear reactor.

4. Apparatus according to any one of claims 1, 2 and 3, characterised in that a non-return valve (29) is arranged on the sprinkler line (25) between the outlet (26c) of the injector and the sprinkler duct (24) and in that the sprinkler line (25) is connected, via a bypass duct (33) between the outlet (26c) of the injector (26) and the nonreturn valve (29), to a reservoir (35) of a start-up device (36) of the sprinkler device (20), via a stop valve (34).

5. Apparatus according to claim 4, characterised in that the reservoir (35) is connected, via a vent line (37) at its upper part and via a drainage line (39) at its lower part, to a reservoir for draining liquid and filling with gas.

6. Apparatus according to claim 5, characterised in that the reservoir for draining liquid and filling with gas consists of the discharge reservoir of the pressuriser of the nuclear reactor.

7. Apparatus according to either of claims 5 and 6, characterised in that a first stop valve (38) is arranged on the vent duct (37) and a second stop valve (40) is arranged on the drainage duct (39), between the reservoir (35) of the start-up device (36) and the reservoir for draining and filling with gas.

8. Apparatus according to any one of claims 1 to 7, characterised in that the sprinkler line (25) of the sprinkler apparatus (20) is connected to auxiliary water supply means (42, 44) via a bypass line (41) and at least one non-return valve (43, 43').

9. Apparatus according to claim 8, characterised in that the auxiliary water supply means (42, 44) consist of the volumetric and chemical control circuit (44) of the nuclear reactor and at least one charging pump (42) of this circuit (44).

10. Apparatus according to any one of claims 1 to 9, characterised in that it comprises two overflow assemblies (20, 20') each comprising a sprinkler duct (24) in the upper part of the pressuriser (21), a supply line (25) for the sprinkler line (24) and a vapour injector (26) having an outlet (26c) connected to the sprinkler line (25).
